(19) Europäisches Patentamt
European Patent Office
Office européen des brevets

(11) **EP 0 412 371 B2**

(12) **NEUE EUROPÄISCHE PATENTSCHRIFT**

(45) Veröffentlichungstag und Bekanntmachung des Hinweises auf die Entscheidung über den Einspruch:
**13.08.1997 Patentblatt 1997/33**

(45) Hinweis auf die Patenterteilung:
**04.05.1994 Patentblatt 1994/18**

(21) Anmeldenummer: **90114413.9**

(22) Anmeldetag: **27.07.1990**

(51) Int Cl.[6]: **C08L 101/00**, C08L 51/04
// (C08L101/00, 51:04, 51:04)

(54) **ABS-Formmassen mit verbesserter Streckspannung**

ABS mouldings with improved tensile stress

Masses à mouler à partir d'ABS avec une contrainte de traction modifiée

(84) Benannte Vertragsstaaten:
**DE ES FR GB IT**

(30) Priorität: **09.08.1989 DE 3926273**

(43) Veröffentlichungstag der Anmeldung:
**13.02.1991 Patentblatt 1991/07**

(73) Patentinhaber: **BAYER AG**
**51368 Leverkusen (DE)**

(72) Erfinder:
• **Eichenauer, Herbert, Dr.**
**D-4047 Dormagen 1 (DE)**
• **Pischtschan, Alfred, Dr.**
**D-5067 Kürten (DE)**
• **Ott, Karl-Heinz, Dr.**
**D-5090 Leverkusen 1 (DE)**

(56) Entgegenhaltungen:
EP-A- 0 264 721        DE-A- 2 940 804
GB-A- 2 141 432

• **Kunststofflexikon, Stoeckert et al., 7. Auflage, Carl Hanser Verlag, Seiten 29 und 34**
• **Leichtverständliche Einführung in die Kunststoff-chemie, Gnauck et al., 2. Auflage, Carl Hanser Verlag, Seite 70**

**Beschreibung**

ABS-Polymerisate sind Chemiewerkstoffe, die sich durch ausgewogene Zähigkeit, Wärmeformbeständigkeit, Verarbeitbarkeit und Oberflächenqualität auszeichnen. Verbessert man eine Eigenschaft, z.B. die Zähigkeit oder die Wärmeformbeständigkeit, dann hat dies in aller Regel Einbußen bei anderen Eigenschaften zur Folge.

Ein besonderes Problem stellt die Herstellung von ABS-Werkstoffen mit guter Zähigkeit, hoher Streckspannung und guter Verarbeitbarkeit dar: Die zur Steigerung der Zähigkeit geeigneten Maßnahmen wie Erhöhung des Pfropfkautschukgehalts oder des Molekulargewichts der Styrol/Acrylnitril-Copolymer-Harzmatrix führen gleichzeitig zu einer starken Abnahme der Steifigkeit bzw. zu einer deutlich schlechteren thermoplastischen Verarbeitbarkeit infolge einer starken Erhöhung der Schmelzviskosität.

Der in EP -A-6521 vorgeschlagene Zusatz von geringen Mengen Silikonöl zur Verbesserung der Zähigkeit führt im Zugversuch zu deutlicher Verschlechtung der Streckspannung, wodurch beim Entformen entsprechender, durch Spritzguß hergestellter Formteile leicht Weißverfärbungen auftreten können.

Es wurde gefunden, daß ABS-Werkstoffe mit guter Zähigkeit, leichter Verarbeitbarkeit sowie hoher Streckspannung unter Erhaltung der sonstigen, für ABS-Polymerisate charakteristischen Eigenschaften, durch Zusatz spezieller Polymerisate erhalten werden.

Gegenstand der vorliegenden Erfindung sind thermoplastische Formmassen, enthaltend

A) 5-95 Gew.-%, bevorzugt 10-90 Gew.-% und besonders bevorzugt 20-75 Gew.-% eines oder mehrerer thermoplastischer Homo-, Co- oder Terpolymerisate von Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat, oder Mischungen daraus,

B) 5-95 Gew.-%, bevorzugt 10-90 Gew.-% und besonders bevorzugt 25-80 Gew.-% Pfropfpolymerisat von

B.1) 5-90 Gew.-Teilen, vorzugsweise 30-80 Gew.-Teilen, Styrol, α-Methylstyrol, kernsubstituiertem Styrol, Methylmethacrylat, (Meth)Acrylnitril, Maleinsäureanhydrid, N-substituiertem Maleinimid, Vinylacetat, oder Mischungen daraus auf.

B.2) 95-10 Gew.-Teile, vorzugsweise 70-20 Gew.-Teile eines Kautschuks mit einer Glastemperatur $\leq$10°C ausgewählt aus Polybutadien, Butadien/Styrolcopolymerisaten, Butadien/Acrylnitril-Copolymerisaten, Polyisopren, und

C) 0,1-5 Gew.-Teile, vorzugsweise 0,5-4 Gew.-Teile pro 100 Gew.-Teile A + B Pfropfprodukt harzbildenden Monomerer auf einen Ethylen-Propylen-Dien-Terpolymerisat-Kautschuk mit einem Kautschukgehalt von 20-60 Gew.-%, vorzugsweise von 25-50 Gew.-%.

Die erfindungsgemäßen Mischungen können die üblichen Zusatzstoffe wie Flammschutzmittel, Stabilisatoren, Entformungsmittel, Pigmente, Gleitmittel, Antistatika, Füllstoffe in den üblichen Mengen enthalten.

Durch den Zusatz von C) werden Formmassen vom ABS-Typ erhalten, die neben guter Zähigkeit und leichter Verarbeitbarkeit eine hohe Streckspannung aufweisen.

Dies bedeutet, daß aus den erfindungsgemäßen Formmassen leicht durch thermoplastische Verarbeitung zähe Spritzgußteile hergestellt werden können, die beim Entformen keine Weißverfärbung zeigen.

Erfindungsgemäß geeignete thermoplastische Polymerisate A) sind solche von Styrol, α-Methylstyrol, p-Methylstyrol, Vinyltoluol, Halogenstyrol, Methylacrylat, Methylmethacrylat, Acrylnitril, Maleinsäureanhydrid, N-substituiertes Maleinimid oder Mischungen daraus.

Die Polymerisate A) sind harzartig, thermoplastisch und kautschukfrei. Besonders bevorzugte Polymerisate A) sind solche aus Styrol, Methylmethacrylat, Styrol/Acrylnitril-Gemischen, Styrol/Acrylnitril/Methylmethacrylat-Gemischen Styrol/Methylmethacrylat-Gemischen, Acrylnitril/Methylmethacrylat-Gemischen, α-Methylstyrol/Acrylnitril-Gemischen, Styrol/α-Methylstyrol/Acrylnitril-Gemischen, α-Methylstyrol/Methylmethacrylat/Acrylnitril-Gemischen, Styrol/α-Methylstyrol/Methylmethacrylat-Gemischen, Styrol/α-Methylstyrol/Methylmethacrylat/Acrylnitril-Gemischen, Styrol/Maleinsäureanhydrid-Gemischen, Methylmethacrylat/Maleinsäureanhydrid-Gemischen, Styrol/Methylmethacrylat/Maleinsäureanhydrid-Gemischen.

Die Polymerisate A) sind bekannt und lassen sich durch radikalische Polymerisation, insbesondere durch Emulsions-, Suspensions-, Lösungs- oder Massepolymerisation herstellen. Sie besitzen vorzugsweise Molekulargewichte $\overline{M}_w$ von 20 000 bis 200 000 bzw. Grenzviskositäten [$\eta$] von 20 bis 110 ml/g (gemessen in Dimethylformamid bei 25°C).

Zur Herstellung der Pfropfpolymerisate B) geeignete Kautschuke sind Polybutadien, Butadien/Styrol-Copolymerisate, Butadien/Acrylnitril-Copolymerisate, und Polyisopren.

Die Kautschuke liegen im Pfropfpolymerisat B) in Form wenigstens partiell vernetzter Teilchen eines mittleren Teilchendurchmessers ($d_{50}$) von 0,05 bis 20.0 μm, bevorzugt von 0,1 bis 2,0 μm und besonders bevorzugt von 0.1 bis 0.8 μm, vor. Der mittlere Teilchendurchmesser $d_{50}$ wird ermittelt durch Ultrazentrifugenmessungen nach W. Scholtan et al, Kolloid-Z. u.Z. Polymere 250(1972), 782-796.

Die Polymerisate B) können durch radikalische Pfropfpolymerisation der Monomeren B.1) in Gegenwart der zu bepfropfenden Kautschuke B.2) hergestellt werden.

Bevorzugte Herstellungsverfahren für die Pfropfpolymerisate B) sind Emulsions-, Lösungs-, Masse- oder Suspensionspolymerisation und an sich bekannten Kombinationen aus diesen Verfahren. Besonders bevorzugte Pfropfpolymeriate B) sind die ABS-Polymerisate.

Als C) sind Pfropfprodukte geeignet, die durch Polymerisation von harzbildenden Monomeren wie Gemischen aus Styrol und Acrylnitril im Gewichtsverhältnis 10:1 bis 1:1, vorzugsweise 5:1 bis 2:1, in Gegenwart eines aus Ethylen, Propylen und einem nichtkonjugierten Dien (z.B. Dicyclopentadien, Ethylidennorbornen) aufgebauten Kautschuks (sog. EPDM-Kautschuk) erhalten werden. Die Herstellung dieser auch als AES-Pfropfpolymerisate bezeichneten Materialien ist bekannt und beispielsweise in EP-A-96 527, EP-A-264 721 und EP-A-286 071 beschrieben. Erfindungsgemäß geeignete AES-Polymerisate sind solche mit einem Kautschukgehalt von 20 bis 60 Gew.-%, vorzugsweise von 25 bis 50 Gew.-%.

Besonders bevorzugte Mischungen bestehen aus

10-80 Gew.-% Pfropfpolymerisat von 30-80 Gew.-Teilen Styrol, $\alpha$-Methylstyrol, p-Methylstyrol, Methylmethacrylat, Acrylnitril oder Mischungen daraus auf 70-20 Gew.-Teile Polybutadien,

90-20 Gew.-% thermoplastisches Copolymerisat aus 5-40 Gew.-Teilen Acrylnitril und 95-60 Gew.-Teilen Styrol, $\alpha$-Methylstyrol, p-Methylstyrol, Methylmethacrylat oder Mischungen daraus und

0.5-4 Gew.-Teilen pro 100 Gew.-Teilen A + B Pfropfprodukt harzbildender Monomerer auf einen Ethylen-Propylen-Dien-Terpolymerisat-Kautschuk.

Die erfindungsgemäßen Mischungen, enthaltend A), B) und C) und gegebenenfalls übliche Zusatzstoffe wie Gleitmittel, Stabilisatoren, Pigmente, Entformungsmittel, Antistatika, Füllstoffe werden hergestellt, indem man die jeweiligen Bestandteile in bekannter Weise simultan oder sukzessive bei Zimmertemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Die Formmassen der vorliegenden Erfindung können zur Herstellung von Formkörpern jeder Art verwendet werden, wobei übliche Herstellungsweisen benutzt werden können, insbesondere können Formkörpern durch Spritzguß hergestellt werden.

Eine weitere Form der Verarbeitung der erfindungsgemäßen Formmassen ist die Herstellung von Formkörpern durch Tiefziehen aus vorher nach bekannten Verfahren hergestellten Platten oder Folien.

## Beispiele

## Thermoplastisches Harz A

Statistisches Styrol/Acrylnitril = 72:28 - Copolymerisat mit einem $\overline{M}_w$ von ca. 115 000 und einer Uneinheitlichkeit $\overline{M}_w/\overline{M}_n$ - 1 $\leqq$ 2,0.

## Pfropfpolymerisat B1

Pfropfprodukt erhalten durch Emulsionspolymerisation von 50 Gew.-% eines Styrol/Acrylnitril-Gemisches (Gew.-Verhältnis 72:28) auf 50 Gew.-% teilchenförmiges Polybutadien mit einem mittleren Teilchendurchmesser ($d_{50}$) von 0.4 µm. Aufarbeitung durch Koagulation des Latex mit einer Essigsäure/Magnesiumsulfat-Mischung und anschließende Trocknung im Vakuum

## Pfropfpolymerisat B2

Pfropfprodukt erhalten durch Emulsionspolymerisation von 50 Gew.-% eines Styrol/Acrylnitril-Gemisches (Gew.-Verhältnis 72:28) auf 50 Gew.-% teilchenförmiges Polybutadien mit einem mittleren Teilchendurchmesser ($d_{50}$) von 0,1 µm. Aufarbeitung wie unter B1.

## AES-Pfropfprodukt C

Pfropfprodukt auf Basis eines EPDM-Kautschuks (mittlerer Teilchendurchmesser ($d_{50}$) ca. 300 nm). (Koblend W4 der Montedipe) Kautschukgehalt ca. 33 %.

A), B) und C) wurden zusammen mit 2 Gew.-Teilen Ethylendiaminbisstearylamid (Beispiele 1 bis 10) bzw 2 Gew.-Teilen Pentaerythrittetrastearat (Beispiele 11 bis 13) als Gleitmittel auf einem 1.3 l Innenkneter bei Temperaturen von 160°C bis 200°C compoundiert. Die Formkörper wurden auf einer Spritzgießmaschine bei 240°C hergestellt.

Die Kerbschlagzähigkeit ($a_k$) wurde bei Zimmertemperatur nach DIN 53 456 (Einheit kJ/m²) ermittelt, die Streckspannung (σs) durch Zugversuch nach DIN 53 455. Die thermoplastische Verarbeitbarkeit wurde durch Messung des notwendigen Fülldrucks bei 240°C (siehe F. Johannaber, Kunststoffe 74 (1984), 1, Seiten 2-5, charakterisiert.

In Tabelle 1 sind die Zusammensetzungen der untersuchten Formmassen sowie die erhaltenen Meßdaten zusammengestellt. Gegenüber den Vergleichsversuchen zeigen die erfindungsgemäßen Mischungen gute Zähigkeit und hohe Streckspannung bei sehr guter thermoplastischer Verarbeitbarkeit; ein Silikonölzusatz gemäß EP-A-6521 führt zwar zu guter Zähigkeit, Streckspannung und Verarbeitbarkeit nehmen jedoch deutlich ab.

## Tabelle 1: Zusammensetzungen und Prüfdaten der Formmassen

| Beispiel Nr. | A Gew.- Teile | B1 Gew.- Teile | B2 Gew.- Teile | C Gew.- Teile | Silikonöl Gew.- Teile | $a_k$ [kJ/m²] | $(\sigma_6)$ [N/mm²] | Fülldruck [bar] |
|---|---|---|---|---|---|---|---|---|
| 1 | 80 | 10 | 10 | 3,3 | --- | 4,5 | 56,8 | 274 |
| 2 (Vergleich) | 80 | 10 | 10 | --- | --- | 4 | 56,1 | 283 |
| 3 (Vergleich) | 80 | 10 | 10 | --- | 0,1 | 5 | 53,2 | 286 |
| 4 | 70 | 15 | 15 | 1,65 | --- | 10 | 52,0 | 304 |
| 5 | 70 | 15 | 15 | 3,3 | --- | 11 | 52,3 | 299 |
| 6 (Vergleich) | 70 | 15 | 15 | --- | --- | 9 | 52,8 | 306 |
| 7 (Vergleich) | 70 | 15 | 15 | --- | 0,1 | 11 | 47,3 | 312 |
| 8 | 60 | 20 | 20 | 3,3 | --- | 14 | 46,4 | 320 |
| 9 (Vergleich) | 60 | 20 | 20 | --- | --- | 11 | 48,8 | 328 |
| 10(Vergleich) | 60 | 20 | 20 | --- | 0,1 | 14,5 | 42,8 | 332 |
| 11 | 50 | 50 | -- | 3,75 | --- | 15,5 | 43,2 | 400 |
| 12(Vergleich) | 50 | 50 | -- | --- | --- | 11,5 | 43,0 | 411 |
| 13(Vergleich) | 50 | 50 | -- | --- | 0,1 | 16,5 | 35,5 | 415 |

EP 0 412 371 B2

**Patentansprüche**

1. Thermoplastische Formmassen enthaltend

   A) 5-95 Gew.-% thermoplastisches Homo-, Co- oder Terpolymerisat von Styrol, $\alpha$-Methylstyrol, kernsubstituiertem Styrol, Methylmethacrylat, Acrylnitril, Methacrylnitril, Maleinsäureanhydrid, N-substituiertem Maleinimid, Vinylacetat, oder Mischungen daraus
   B) 5-95 Gew.-% Pfropfpolymerisat von
   B.1) 5-90 Gew.-Teilen Styrol, $\alpha$-Methylstyrol, kernsubstituiertem Styrol, Methylmethacrylat, Acrylnitril, Methacrylnitril, Maleinsäureanhydrid, N-substituiertem Maleinimid, Vinylacetat, oder Mischungen daraus auf
   B.2) 95-10 Gew.-Teile eines Kautschuks mit einer Glastemperatur $\leq$10°C ausgewählt aus Polybutadien, Butadien/Styrolcopolymerisaten, Butadien/Acrylnitril-Copolymerisaten, Polyisopren, und
   C) 0,1-5 Gew.-Teile pro 100 Gew.-Teile A + B Pfropfprodukt harzbildender Monomerer auf einen Ethylen-Propylen-Dien-Terpolymerisat-Kautschuk mit einem Kautschukgehalt von 20-60 Gew.-%.

2. Thermoplastische Formmassen enthaltend

   A) 90-20 Gew-% thermoplastisches Harz aus 5-40 Gew.-Teilen Acrylnitril und 95-60 Gew.-Teilen Styrol, $\alpha$-Methylstyrol, p-Methylstyrol, Methylmethacrylat oder Mischungen daraus,
   B) 10-80 Gew.-% Pfropfpolymerisat von 30-80 Gew.-Teilen Styrol, $\alpha$-Methylstyrol, p-Methylstyrol, Methylmethacrylat, Acrylnitril oder Mischungen daraus auf 70-20 Gew.-Teile Polybutadien und
   C) 0,5-4 Gew.-Teile pro 100 Gew.-Teile A + B Pfropfprodukt harzbildender Monomerer auf einen Ethylen-Propylen-Dien-Terpolymerisat-Kautschuk.

**Claims**

1. Thermoplastic moulding compounds containing

   A) 5-95 wt.% of a thermoplastic homopolymer, copolymer or terpolymer of styrene, $\alpha$-methyl styrene, nucleus-substituted styrene, methyl methacrylate, acrylonitrile, methacrylonitrile, maleic anhydride, N-substituted maleimide, vinyl acetate or mixtures thereof,
   B) 5-95 wt.% of a graft polymer of
   B.1) 5-90 parts by weight of styrene, $\alpha$-methyl styrene, nucleus-substituted styrene, methyl methacrylate, acrylonitrile, methacrylonitrile, maleic anhydride, N-substituted maleimide, vinyl acetate or mixtures thereof on
   B.2) 95-10 parts by weight of a rubber having a glass temperature of $\leq$ 10°C selected from polybutadiene, butadiene-styrene copolymers, butadiene-acrylonitrile copolymers, polyisoprene and
   C) 0.1-5 parts by weight per 100 parts by weight of A + B of a graft product of resin-forming monomers on an ethylene-propylene-diene terpolymer rubber having a rubber content of 20-60 wt.%.

2. Thermoplastic moulding compounds containing

   A) 90-20 wt.% of a thermoplastic resin of 5-40 parts by weight of acrylonitrile and 95-60 parts by weight of styrene, $\alpha$-methyl styrene, p-methyl styrene, methyl methacrylate or mixtures thereof,
   B) 10-80 wt.% of a graft polymer of 30-80 parts by weight of styrene, $\alpha$-methyl styrene, p-methyl styrene, methyl methacrylate, acrylonitrile or mixtures thereof on 70-20 parts by weight of polybutadiene and
   C) 0.5-4 parts by weight per 100 parts by weight of A + B of a graft product of resin-forming monomers on an ethylene-propylene-diene terpolymer rubber.

**Revendications**

1. Matières à mouler thermoplastiques contenant

   A) 5 à 95 % en poids d'un homopolymère, copolymère ou copolymère ternaire thermoplastique du styrène, de l'$\alpha$-méthylstyrène, d'un styrène substitué dans le noyau, du méthacrylate de méthyle, de l'acrylonitrile, du méthacrylonitrile, de l'anhydride maléique, d'un maléimide substitué à l'azote, de l'acétate de vinyle ou leurs mélanges,

B) 5 à 95 % en poids d'un polymère greffé de

B.1) 5 à 90 parties en poids de styrène, d'α-méthylstyrène, d'un styrène substitué dans le noyau, du méthacrylate de méthyle, de l'acrylonitrile, du méthacrylonitrile, de l'anhydride maléique, d'un maléimide substitué à l'azote, de l'acétate de vinyle ou leurs mélanges sur

B.2) 95 à 10 parties en poids d'un caoutchouc présentant une température de transition du second ordre inférieure ou égale à 10°C et choisi dans le groupe formé par le polybutadiène, les copolymères butadiène/styrène, les copolymères butadiène/acrylonitrile, le polyisoprène,

C) 0,1 à 5 parties en poids, pour 100 parties en poids de A + B, d'un produit de greffage de monomères formant des résines sur un caoutchouc copolymère ternaire éthylène/propylène/diène à teneur en caoutchouc de 20 à 60 % en poids.

2.  Matières à mouler thermoplastiques contenant

A) 90 à 20 % en poids d'une résine thermoplastique de 5 à 40 parties en poids d'acrylonitrile et 95 à 60 parties en poids de styrène, d'α-méthylstyrène, de p-méthylstyrène, de méthacrylate de méthyle ou leurs mélanges,

B) 10 à 80 % en poids d'un polymère greffé de

30 à 80 parties en poids de styrène, d'α-méthylstyrène, de p-méthylstyrène, de méthacrylate de méthyle, d'acrylonitrile ou leurs mélanges sur 70 à 20 parties en poids de polybutadiène et

C) 0,5 à 4 parties en poids, pour 100 parties en poids de A + B, d'un produit de greffage de monomères formant des résines sur un caoutchouc copolymère ternaire éthylène/propylène/diène.